# EUROPÄISCHE PATENTSCHRIFT

(11) **EP 2 952 319 B1**
(45) Veröffentlichungstag und Bekanntmachung des Hinweises auf die Patenterteilung: **19.04.2017**
(21) Anmeldenummer: 14171526.8
(22) Anmeldetag: 06.06.2014
(51) Int. Cl.: B29C 45/00

(54) **Verfahren zum spannungsarmen Spritzgießen von amorphen oder mikrokristallinen Polyamiden**
Method for low stress injection moulding of amorphous or microcrystalline polyamides
Procédé de moulage par injection à faible tension de polyamides amorphes ou monocristallins

(43) Veröffentlichungstag der Anmeldung: 09.12.2015
(73) Patentinhaber: EMS-PATENT AG, 7013 Domat / Ems (CH)
(72) Erfinder: Hoffmann, Botho, 7013 Domat/Ems (CH); Lampe, Alexander, 7013 Domat/Ems (CH); Aepli, Etienne, 7013 Domat/Ems (CH)
(74) Vertreter: Pfenning, Meinig & Partner mbB

(56) Entgegenhaltungen:
- WO-A1-2007/087896
- anonymous: "Grilamid TR A transparent polyamide with unlimited possibilities", Grilamid EMS , Dezember 2003 (2003-12), Seiten 1-36, XP002731763, Gefunden im Internet: URL:http://www.mess-regeltechnik.at/LICO/G rilamed_prospekt_4007_e.pdf [gefunden am 2014-10-27]
- anonymous: "Grilamid TR Transparent Polyamide for the most exacting requirements", Ems-Grivory , Mai 2011 (2011-05), Seiten 1-36, XP002731764, Gefunden im Internet: URL:http://www.com-isola.it/pdf/brochure/B -TR.pdf [gefunden am 2014-10-27]

## Beschreibung

Die vorliegende Erfindung betrifft ein Verfahren zum spannungsarmen Spritzgießen von amorphen oder mikrokristallinen Polyamiden, bei dem eine Schmelze der amorphen oder mikrokristallinen Polyamide bei bestimmten Bedingungen verarbeitet und spritzgegossen wird. Somit lassen sich spannungsarme Formkörper aus den amorphen oder mikrokristallinen Polyamiden durch Spritzguss herstellen.

Verfahren zum Spritzgießen von amorphen oder mikrokristallinen Polyamidformmassen sind aus dem Stand der Technik bekannt. Beispielsweise ist aus der EP 1369 447 A1 bekannt, amorphe oder mikrokristalline Polyamide, wie beispielsweise PA MACM12 bzw. PA MACM12/PACM12 mit unterschiedlichen Verhältnissen MACM zu PACM durch Spritzguss zu verarbeiten.

Entsprechende Möglichkeiten der Verarbeitung von amorphen Polyamiden sind ebenso aus EP 1 397 414 A1, EP 1 979 396 A1 sowie EP 2 055 743 A1 bekannt.

Aus dem Dokument XP2731763 werden typische Schmelzen- und Spritzgusswerkzeugstemperaturen beim Spritzgießen von amorphen und mikrokristallinen Polyamiden beschrieben.

Das Dokument XP2731764 beschreibt, dass die Einspritzgeschwindigkeit am Ende eines Einspritzzyklus vorzugsweise zu reduzieren ist.

Aus der WO 2007/087896 sind Polyamidformmassen bzw. Copolyamidformmassen und deren Verwendung zur Herstellung von Heißdampf-sterilisierbaren, transparenten Formteilen und Extrudaten bekannt.

Beim Spritzgussverfahren werden in der Regel die Temperatur der zu spritzenden Formmasse und die Werkzeugtemperatur vorgegeben. Zusätzlich können Parameter wie z.B. Einspritzdruck, Einspritzgeschwindigkeit, Staudruck oder Nachdruck variiert werden. Allerdings wurde bislang nicht erkannt, dass die Abstimmung dieser Parameter aufeinander Auswirkungen auf die Eigenschaften des spritzgegossenen Formkörpers haben könnten. Insbesondere ist es nach wie vor problematisch, dass bei durch Spritzguss aus amorphen oder mikrokristallinen Polyamidformmassen hergestellten Formkörpern eine geringe Spannungsrissbeständigkeit zu beobachten ist.

Die Aufgabe der vorliegenden Erfindung war es daher, ein Spritzgussverfahren für amorphe oder mikrokristalline Polyamide anzugeben, mit denen sich die Spannungsrissbeständigkeit in den hergestellten Formkörpern merklich verbessern lässt.

Diese Aufgabe wird durch das Verfahren gemäß Patentanspruch 1 gelöst. Mit Patentanspruch 15 wird ein entsprechend hergestellter Formkörper beschrieben. Die jeweilig abhängigen Patentansprüche stellen dabei vorteilhafte Weiterbildungen dar.

Die vorliegende Erfindung betrifft somit ein Verfahren zum spanungsarmen Spritzgießen von amorphen oder mikrokristallinen Polyamiden, bei dem eine Polyamidschmelze, bestehend aus einem amorphen oder mikrokristallinen Polyamid oder einer Mischung aus mindestens zwei amorphen oder mikrokristallinen Polyamiden, mittels eines Spritzgusswerkzeugs spritzgegossen wird, wobei während des Spritzgießvorgangs die Polyamidschmelze auf eine Temperatur von 255 bis 310 °C eingestellt wird, die Temperatur des Spritzgusswerkzeugs auf 50 bis 120 °C eingestellt wird und die Einspritzgeschwindigkeit der Polyamidschmelze auf 10 bis 50 mm/s eingestellt wird.

Überraschenderweise wurde festgestellt, dass eine Kombination von drei speziellen Parametern des Spritzgussverfahrens, nämlich das Einstellen der Polyamidschmelze sowie des Spritzgusswerkzeugs auf spezifische Temperaturen, kombiniert mit der Einspritzgeschwindigkeit der Polyamidschmelze zu deutlich verbesserten Werten in der Spannungsrissbeständigkeit bei den hergestellten Formkörpern führt. Dabei ist es wesentlich, diese drei Parameter auf die im Anspruch 1 angegebenen Bereiche abzustimmen. Erst dadurch werden die erfindungsgemäßen Vorteile verwirklicht.

Die amorphen oder mikrokristallinen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 30 J/g, bevorzugt von maximal 25 J/g, besonders bevorzugt 0 bis 22 J/g.

Mikrokristalline Polyamide sind teilkristalline Polyamide und zeigen daher einen Schmelzpunkt.

Die amorphen Polyamide weisen, verglichen mit den mikrokristallinen Polyamiden eine noch geringere Schmelzwärme auf. Die amorphen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 5 J/g, bevorzugt von maximal 3 J/g, besonders bevorzugt von 0 bis 1 J/g.

Gemäß einer bevorzugten Ausführungsform wird die Einspritzgeschwindigkeit der Polyamidschmelze während des Spritzgießvorgangs auf 15 bis 35 mm/s, bevorzugt 18 bis 30 mm/s eingestellt.

Bevorzugte Temperaturen der Polyamidschmelze während des Spritzgießvorgangs betragen dabei von 260 bis 295 °C, bevorzugt 270 bis 290 °C.

Vorteilhafterweise beträgt die Temperatur des Spritzgusswerkzeugs während des Spritzgießvorgangs von 60 bis 100 °C, bevorzugt 70 bis 90 °C.

Zusätzlich zu den oben genannten drei essentiellen Parametern können auch für die übrigen Parameter während des Spritzgießvorgangs die folgenden Werte eingestellt werden.

Insbesondere wird der Einspritzdruck während des Spritzgießvorgangs auf 800 bis 1500 bar, bevorzugt 900 bis 1400 bar, besonders bevorzugt 1000 bis 1300 bar eingestellt.

Während des Spritzgießvorgangs ist es ebenso bevorzugt, den Staudruck auf 50 bis 200 bar, bevorzugt 70 bis 150 bar, besonders bevorzugt 100 bis 130 bar einzustellen.

Zusätzlich oder alternativ hierzu kann während des Spritzgießvorgangs der Nachdruck auf 400 bis 800 bar, bevorzugt 500 bis 700 bar, besonders bevorzugt 550 bis 650 bar eingestellt werden.

Das Spritzgussverfahren wird dabei insbesondere auf einer herkömmlichen Spritzgußmaschine durchgeführt. Diese weist eine Schnecke für den Transport der Polyamidschmelze auf. Bevorzugt handelt es sich hierbei um eine gängige 3-Zonen-Standard-Schnecke mit 20 bis 40 mm Durchmesser. Insbesondere wird die Schneckenumfangsgeschwindigkeit der Förderschnecke dabei auf 0,20 bis 0,50 m/s, bevorzugt 0,25 bis 0,42 m/s, besonders bevorzugt 0,28 bis 0,35 m/s eingestellt.

Vorzugsweise beträgt die Verweilzeit der Polyamidschmelze im Zylinder der Spritzgussmaschine 0,5 bis 6 min, bevorzugt 0,75 bis 5 min, besonders bevorzugt 1 bis 3 min.

Hinsichtlich der amorphen oder mikrokristallinen Polyamide unterliegt die vorliegende Erfindung keinerlei Beschränkung. Vorzugsweise ist das amorphe oder mikrokristalline Polyamid dabei ausgewählt aus der Gruppe bestehend aus amorphen oder mikrokristallinen Polyamiden mit einer Glasübergangstemperatur (gemessen nach ISO 11357) von 125 bis 210 °C, bevorzugt von 145 bis 200 °C, besonders bevorzugt von 150 bis 190 °C.

Insbesondere ist das amorphe oder mikrokristalline Polyamid gebildet aus mindestens einem Diamin, ausgewählt aus einer Gruppe, die aus Ethylendiamin, Butandiamin, Pentandiamin, Methylpentandiamin, Hexamethylendiamin, Octandiamin, Methyloctandiamin, Nonandiamin, Decandiamin, Undecandiamin, Dodecandiamin, Trimethylhexamethylendiamin, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Cyclohexandiamin, Bis(aminomethyl)-cyclohexan und seinen Alkylderivaten besteht, und mindestens einer Dicarbonsäure, ausgewählt aus einer Gruppe, die aus Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Phenylindandicarbonsäure, Phenylendioxydiessigsäure, Dimerfettsäure mit 36 oder 44 C-Atomen, Isophthalsäure, Terephthalsäure, Naphthalindicarbonsäure besteht, und gegebenenfalls mindestens einem Laktam mit 4 bis 15 C-Atomen und/oder α,ω-Aminosäure mit 4 bis 15 C-Atomen.

Speziell bevorzugte Diamine sind Hexamethylendiamin, Trimethylhexamethylendiamin, 2-Methyl-1,5-pentandiamin, Bis(4-amino-3-methyl-cyclohexyl)-methan (abgekürzt MACM), Bis(4-amino-cyclohexyl)methan (abgekürzt PACM), Bis(4-amino-3-ethyl-cyclohexyl)methan, Bis(4-amino-3,5-dimethyl-cyclohexyl)methan (abgekürzt TMDC), 2,2-(4,4'-Diaminodicyclohexyl)propan, Isophorondiamin, Norbornandiamin, m-Xylylendiamin (abgekürzt MXD) und 1,3-Bis(aminomethyl)cyclohexan (abgekürzt 1,3-BAC).

Speziell bevorzugte Dicarbonsäuren sind Adipinsäure, Azelainsäure, Sebazinsäure, 1,12-Dodecandisäure, Brassylsäure, 1,14-Tetradecandisäure, 1,15-Pentadecansäure, 1,16-Hexadecandisäure, 1,18-Octadecandisäure, 1,3-Cyclohexandicarbonsäure, 1,4-Cyclohexandicarbonsäure, Phenylindandicarbonsäure, 1,4-Phenylendioxydiessigsäure, 1,3-Phenylendioxydiessigsäure, Dimerfettsäure mit 36 oder 44 C-Atomen, Isophthalsäure (abgekürzt I), Terephthalsäure(abgekürzt T) und 2,6-Naphthalindicarbonsäure (abgekürzt N).

Speziell bevorzugte Laktame sind Laktame bzw. α, ω-Aminosäuren mit 4, 6, 7, 8, 11 oder 12 C-Atomen. Dies sind die Laktame Pyrrolidin-2-on (4 C-Atome), ε-Caprolaktam (6 C-Atome), Önanthlaktam (7 C-Atome), Capryllaktam (8 C-Atome), Laurinlaktam (12 C-Atome) bzw. die α, ω-Aminosäuren 1,4-Amino-butansäure, 1,6-Aminohexansäure, 1,7-Aminoheptansäure, 1,8-Amino-octansäure, 1,11-Aminoundecansäure und 1,12-Aminododecansäure.

Insbesondere ist es bevorzugt, wenn die amorphen oder mikrokristallinen Polyamide ausgewählt sind aus der Gruppe bestehend aus PA 6I, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PATMDC10, PATMDC12, PATMDC14, PATMDC18, PA PACM12, PA PACM10/11, PA PACM10/12, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM14/1014, PA MACM18/1018, PA MACM12/1212, PA 6I/6T/MACMI/MACMT/MACM12/612, PA 6I/6T/MACMI/MACMT/ MACM12, PA MACMI/MACMT/MACM12/12, PA MACMI/MACMT/MACM12, PA 6I/6T/MACMI/MACMT/12, PA 6I/6T/6N/MACMI/MACMT/MACMN und Mischungen oder Copolymere hiervon, wobei das MACM bis zu maximal 25 Mol-%, bezogen auf die Summe der molaren Anteile aller Monomere von 100 Mol-%, durch PACM und/oder das Laurinlaktam ganz oder teilweise durch Caprolaktam ersetzt sein kann.

Bezüglich des Naphthalindicarbonsäuregehalts ist eine Menge von maximal 10 Mol-%, bezogen auf die Summe der molaren Anteile aller Monomere von 100 Mol-%, bevorzugt.

Der Laktam- und/oder α,ω-Aminosäuregehalt des amorphen oder mikrokristallinen Polyamids beträgt 0 bis 40 Mol-%, bevorzugt 0 bis 30 Mol-%, bezogen auf die Summe der molaren Anteile aller Monomere von 100 Mol-%.

Besonders bevorzugte amorphe Polyamide sind:
PA MXDI/6I, PA MXDI/MXD6, PA MACM10, PA MACM12, PA MACM12/ PACM12, PA MACM14, PA MACM14/PACM14, PA MACM18, PA TMDC12, PA TMDC14, PATMDC18, PA MACMI/12, PA MACMI/MACM12, PA MACMI/ MACMT/12, PA 6I/6T/MACMI/MACMT, PA MACM10/1010, PA MACM14/ 1014, PA 6I/6T/MACMI/MACMT/MACM12, PA MACMI/MACMT/ MACM12/ 12, PA MACMI/MACMT/MACM12, PA 6I/6T/MACMI/MACMT/ PACMI/ PACMT/12, PA 6I/6T/MACMI/MACMT/MACM12/PACMI/ PACMT/PACM12
und Mischungen oder Copolymere hiervon, wobei der Gehalt an PACM maximal 25 Mol-%, bezogen auf die Summe der molaren Anteile aller Monomere von 100 Mol-% beträgt.

Der Anteil des PACM im PA MACM12/PACM12 beträgt bevorzugt 1 bis 25 Mol-%, wobei die Summe der molaren Anteile aller Monomere 100 Mol-% ergibt. PA MACM12/PACM12 mit maximal 25 Mol-% PACM sind amorph.

Der Anteil des PACM im PA MACM14/PACM14 beträgt bevorzugt 1 bis 25 Mol-%, wobei die Summe der molaren Anteile aller Monomere 100 Mol-% ergibt. PA MACM14/PACM14 mit maximal 25 Mol-% PACM sind amorph.

Unter den PA MACMI/12 sind diejenigen mit einem Anteil an Laurinlaktam von 15 bis 50 Mol-% bevorzugt, wobei die Summe der molaren Anteile aller Monomere 100 Mol-% ergibt. Besonders bevorzugt sind PA MACMI/12 mit einem Anteil an Laurinlaktam von 20 bis 40 Mol-%. Insbesondere bevorzugt sind PA MACMI/12 mit einem Anteil an Laurinlaktam von 19 Mol-% oder 35 Mol-%.

Unter den PA MACMI/MACMT/12 sind diejenigen mit equimolarem Verhältnis Isophthalsäure zu Terephthalsäure und einem Anteil an Laurinlaktam von 15 bis 40 Mol-% bevorzugt, wobei die Summe der molaren Anteile aller Monomere 100 Mol-% ergibt. Besonders bevorzugt besitzen die PA MACMI/MACMT/12 ein equimolares Verhältnis Isophthalsäure zu Terephthalsäure und einem Anteil an Laurinlaktam von 20 bis 30 Mol-%. Insbesondere bevorzugt besitzt das PA MACMI/MACMT/12 das Molverhältnis 38/38/24.

Unter den PA 6I/6T/MACMI/MACMT/12 sind diejenigen mit equimolarem Verhältnis Isophthalsäure zu Terephthalsäure und einem Anteil an Laurinlaktam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/12 ein äquimolares Verhältnis Isophthalsäure zu Terephthalsäure und einem Anteil an Laurinlaktam von 2 bis 15 Mol-%. Insbesondere bevorzugt besitzt das PA 6I/6T/MACMI/MACMT/12 das Molverhältnis 34/34/14/14/4.

Unter den PA 6I/6T/MACMI/MACMT/PACMI/PACMT/12 sind diejenigen mit äquimolarem Verhältnis Isophthalsäure zu Terephthalsäure und einem Anteil an Laurinlaktam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/PACMI/PACMT/12 ein äquimolares Verhältnis Isophthalsäure zu Terephthalsäure und einem Anteil an Laurinlaktam von 2 bis 15 Mol-%. Insbesondere bevorzugt besitzen die PA 6I/6T/MACMI/MACMT/ PACMI/PACMT /12 ein äquimolares Verhältnis Isophthalsäure zu Terephthalsäure, einen Anteil an PACM von 2 bis 7 Mol-% und einen Anteil an Laurinlaktam von 2 bis 7 Mol-%.

Unter den PA MACMI/MACMT/MACM12 sind diejenigen mit äquimolarem Verhältnis Isophthalsäure zu Terephthalsäure und einem Anteil an Dodecandisäure von 30 bis 60 Mol-% bevorzugt, wobei die Summe der molaren Anteile aller Monomere 100 Mol-% ergibt. Besonders bevorzugt besitzen die PA MACMI/MACMT/MACM12 ein äquimolares Verhältnis Isophthalsäure zu Terephthalsäure und einen Anteil an Dodecandisäure von 40 bis 50 Mol-%. Insbesondere bevorzugt besitzt das PA MACMI/MACMT/MACM12 das Molverhältnis 27/27/46.

Enthalten die Polyamide nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Enthalten die Polyamide neben Disäuren und Diaminen auch Laktame oder α,ω-Aminosäuren zu x Mol-%, so beträgt die Summe aller Diamine nur noch (50-0,5 x) Mol-% und Summe aller Disäuren (50-0,5 x) Mol-%, bezogen auf 100 Mol-% Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet.

Die amorphen oder mikrokristallinen Polyamide bzw. die Mischungen aus amorphen oder mikrokristallinen und teilkristallinen aliphatischen Polyamiden zeigen eine Lichttransmission gemessen nach ASTM D 1003 an Platten der Dicke 2 mm (hergestellt in einem hochglanzpolierten Werkzeug unter Einhaltung der in dieser Anmeldung genannten Spritzgussparameter) von mindestens 80 %, bevorzugt von mindestens 85 %, besonders bevorzugt von mindestens 88 % sowie ganz besonders bevorzugt von mindestens 90 % und somit eine hohe Transparenz.

Teilkristalline Polyamide können als Mischungskomponente für die amorphen oder mikrokristallinen Polyamide verwendet werden.

In den Mischungen aus amorphen oder mikrokristallinen und teilkristallinen aliphatischen Polyamiden werden 2 bis 28 Gew.-%, bevorzugt 3 bis 25 Gew.-%, besonders bevorzugt 10 bis 20 Gew.-% des amorphen oder mikrokristallinen Polyamids durch mindestens ein teilkristallines Polyamid ersetzt.

Die bevorzugten, teilkristallinen aliphatischen Polyamide sind ausgewählt aus der Gruppe PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, Polyetheramiden, Polyetheresteramiden, Polyesteramiden und deren Mischungen oder Copolymere.

Besonders bevorzugt sind die teilkristallinen aliphatischen Polyamide ausgewählt aus der Gruppe PA 6, PA 69, PA 610, PA 612, PA 614, PA 1010, PA 1212, PA 6/66/12, PA 6/66, PA 6/12, PA 11, PA 12, Polyetheramide und Polyetheresteramide.

Ebenso ist es allerdings besonders bevorzugt, wenn die im Spritzgussverfahren verarbeitete Schmelze ausschließlich aus einem amorphen Polyamid bzw. einem Gemisch bzw. Blend mehrerer amorpher Polyamide besteht.

Die Schreibweisen und Abkürzungen für Polyamide und deren Monomere sind in der ISO-Norm 1874-1:1992(E) festgelegt.

Die relative Viskosität (RV) der amorphen Polyamide beträgt vorzugsweise 1,35 bis 2,15, bevorzugt 1,40 bis 1,85, besonders bevorzugt 1,45 bis 1,75 beträgt, gemessen mit 0,5 g in 100 ml m-Kresol bei 20°C.

Die relative Viskosität (RV) der teilkristallinen aliphatischen Polyamide beträgt vorzugsweise 1,40 bis 2,15, bevorzugt 1,45 bis 2,0, besonders bevorzugt 1,50 bis 1,90 gemessen mit 0,5 g in 100 ml m-Kresol bei 20 °C.

Die amorphen oder mikrokristallinen Polyamide bzw. die Mischungen aus amorphen oder mikrokristallinen und teilkristallinen aliphatischen Polyamiden können zusätzlich weitere Additive enthalten, insbesondere ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, Farbstoffen, Nukleierungsmitteln, Kristallisationsverzögerern, Antistatika, Entformungsmitteln, optischen Aufhellern, natürlichen Schichtsilikaten, synthetischen Schichtsilikaten und deren Mischungen.

Als Stabilisatoren bzw. Alterungsschutzmittel können in den amorphen oder mikrokristallinen Polyamiden, z.B. Antioxidantien, Antiozonantien, Lichtschutzmittel, UV-Stabilisatoren, UV-Absorber oder UV-Blocker eingesetzt werden.

Die weiteren Additive können vorzugsweise in einer Menge von 0,01 bis 6 Gew.-%, bezogen auf die gesamte Polyamidformmasse, enthalten sein.

Zudem wird ein Formkörper, der gemäß dem voranstehenden Verfahren hergestellt werden kann, beschrieben. Der Formkörper ist dabei aus einem amorphen oder mikrokristallinen Polyamid oder einer Mischung aus mindestens zwei amorphen oder mikrokristallinen Polyamiden gebildet. Der Formkörper zeichnet sich durch eine erhöhte Spannungsrissbeständigkeit, verglichen zu Formkörper aus einem amorphen oder mikrokristallinen Polyamid oder einer Mischung aus mindestens zwei amorphen oder mikrokristallinen Polyamiden, die nicht nach dem voranstehend beschriebenen Verfahren hergestellt sind, aus. Vorzugsweise wird die Messung der Spannungsrissbeständigkeit dabei in Isopropanol bzw. Pyrrolidon durchgeführt.

Die vorliegende Erfindung wird anhand der nachfolgenden Beispiele näher erläutert, ohne die Erfindung auf die dargestellten speziellen Parameter zu beschränken.

Zur Untersuchung des Einflusses der unterschiedlichen Parameter des Spritzgussverfahrens, insbesondere der Massetemperatur, Werkzeugtemperatur, Einspritzgeschwindigkeit, Einspritzdruck, Staudruck, Nachdruck und Schneckenumfangsgeschwindigkeit, auf die Spannungsrissbeständigkeit eines durch ein entsprechendes Spritzgussverfahren hergestellten Formkörpers wurden die nachfolgenden Spritzgussexperimente mit unterschiedlichen amorphen Polyamiden durchgeführt.

Als Formkörper wurde der ISO-Zugstab, Norm: ISO/CD 3167, Typ A1, 170 x 20/10 x 4 mm gewählt.

Die ISO-Zugstäbe wurden auf einer Spritzgussmaschine der Firma Arburg, Modell Allrounder 420 C 1000-250 mit einer 3-Zonen-Standard-Schnecke mit einem Durchmesser von 25 mm hergestellt. Dabei wurden die in Tabelle 2 angegebenen Spritzgussparameter verwendet.

Die ISO-Zugstäbe wurden in trockenem Zustand verwendet; dazu wurden sie nach dem Spritzguss mindestens 48 h bei Raumtemperatur in trockener Umgebung, d.h. über Silicagel gelagert.

In dieser Anmeldung verwendete Messmethoden:
Zug-E-Modul:
   ISO 527 mit einer Zuggeschwindigkeit von 1 mm/min
   ISO-Zugstab, Norm: ISO/CD 3167, Typ A1, 170 x 20/10 x 4 mm, Temperatur 23 °C
Relative Viskosität
   ISO 307
   Granulat
   0,5 g in 100 ml m-Kresol
   Temperatur 20 °C
   Berechnung der relativen Viskosität (RV) nach RV = t/t₀ in Anlehnung an Abschnitt 11 der Norm.
Schmelzpunkt, Schmelzwärme und Glasübergangstemperatur (Tg):
   ISO 11357
   Granulat
   Die Differential Scanning Calorimetry (DSC) wurde mit einer Aufheizrate von 20 K/min durchgeführt. Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.
Spannungsrissbeständigkeit:
   DIN 53449, Teil 3 Biegestreifenverfahren
   ISO-Zugstab, Norm: ISO/CD 3167, Typ A1, 170 x 20/10 x 4 mm, Temperatur 23 °C
   Gemessen wird die Randfaserdehnung bei der nach 60 sekündigem Eintauchen des unter Spannung stehenden ISO-Zugstabes in das Lösungsmittel Risse mit bloßem Auge sichtbar sind.
   Zur Umrechnung der gemessenen Randfaserdehnung in die angegebene Spannung wird der erhaltene Prozentwert der Randfaserdehnung mit dem Zug-E-Modul (trocken, MPa) des vermessenen Materials multipliziert.
Lichttransmission:
   ASTM D 1003
   Platte, Dicke 2 mm, 60 x 60 mm
   Temperatur 23 °C
   Messgerät Haze Gard plus der Firma Byk Gardner mit CIE Lichtart C. Der Lichttransmissionswert wird in % der eingestrahlten Lichtmenge angegeben.

In Tabelle 1 sind die in den Beispielen und Vergleichsbeispielen verwendeten Materialien angegeben:

**Tabelle 1**

| **Material** | **Beschreibung** | **Hersteller** |
|---|---|---|
| Polyamid A1 | amorphes Polyamid MACM12 aus Bis(3-methyl-4-amino-cyclohexyl)methan und Dodecandisäure RV 1,70 (gemessen mit 0,5 g in 100 ml m-Kresol bei 20 °C) | EMS-CHEMIE AG, Schweiz |
| | Glasübergangstemperatur 155 °C | |
| | Zug-E-Modul, trocken, bei 23 °C 1600 MPa | |
| Polyamid A2 | amorphes Polyamid MACMI/MACMT/12 im Molverhältnis 38/38/24 aus Bis(3-methyl-4-amino-cyclohexyl)methan, Isophthalsäure, Terephthalsäure und Laurinlaktam RV 1,53 (gemessen mit 0,5 g in 100 ml m-Kresol bei 20 °C) | EMS-CHEMIE AG, Schweiz |
| | Glasübergangstemperatur 190 °C | |
| | Zug-E-Modul, trocken, bei 23 °C 2200 MPa | |
| Poly-amid A3 | amorphes Polyamid MACMI/MACMT/MACM12 im Molverhältnis 27/27/46 aus Bis(3-methyl-4-amino-cyclohexyl)methan, Isophthalsäure, Terephthalsäure und Dodecandisäure RV 1,54 (gemessen mit 0,5 g in 100 ml m-Kresol bei 20 °C) | EMS-CHEMIE AG, Schweiz |
| | Glasübergangstemperatur 200 °C | |
| | Zug-E-Modul, trocken, bei 23 °C 2100 MPa | |

Um den Spannungseintrag beim Spritzguss zu bestimmen, wurden die ISO-Zugstäbe aus den in Tabelle 1 beschriebenen verschiedenen amorphen Polyamiden mittels Spritzguss hergestellt. Die einzelnen Parameter für das jeweilige Spritzgussverfahren sind in Tabelle 2 angegeben. Die Spannungsrissbeständigkeit wurde in zwei verschiedenen Lösungsmitteln gemessen. Überraschenderweise konnte festgestellt werden, dass die Spannungsrissbeständigkeit, (gemessen beispielsweise in Isopropanol bzw. Pyrrolidon) bei den erfindungsgemäß hergestellten ISO-Zugstäben, bei denen eine genaue Abstimmung der Massentemperatur, Werkzeugtemperatur und der Einspritzgeschwindigkeit erfolgte, deutlich höher ausfällt als bei den Vergleichsbeispielen, bei denen abweichende Parameter für das Spritzgussverfahren verwendet werden.

**Tabelle 2 Beispiele und Vergleichsbeispiele**

| | | **Beispiele** | | | **Vergleichsbeispiele** | | | |
|---|---|---|---|---|---|---|---|---|
| **Spritzgussparameter** | **Einheit** | **1** | **2** | **3** | **4** | **5** | **6** | **7** |
| **Polyamid** | - | A1 | A2 | A3 | A1 | A1 | A2 | A3 |
| **Massetemperatur** | **°C** | 275 | 290 | 290 | 255 | 265 | 290 | 290 |
| **Werkzeugtemperatur** | **°C** | 70 | 90 | 90 | 50 | 60 | 90 | 90 |
| **Einspritzdruck** | **bar** | 1000 | 1300 | 1300 | 1500 | 1000 | 1300 | 1300 |
| **Einspritzgeschwindigkeit** | **mm/s** | 20 | 20 | 20 | 60 | 90 | 90 | 90 |
| **Staudruck** | **bar** | 120 | 120 | 120 | 50 | 120 | 120 | 120 |
| **Nachdruck** | **bar** | 600 | 600 | 600 | 1000 | 1000 | 1100 | 1100 |
| **Schneckenumfangsgeschwindigkeit** | **m/s** | 0,30 | 0,30 | 0,30 | 0,40 | 0,30 | 0,30 | 0,30 |
| **Tests Spannungsrissbeständigkeit** | **-** | | | | | | | |
| **Isopropanol** | **MPa** | 12 | 22 | 17 | 0 | 0 | 17 | 5 |
| **Pyrrolidon** | **MPa** | 20 | 11 | 21 | 16 | 16 | 0 | 10 |

## Patentansprüche

1. Verfahren zum spannungsarmen Spritzgießen von amorphen oder mikrokristallinen Polyamiden, bei dem eine Polyamidschmelze, bestehend aus einem amorphen oder mikrokristallinen Polyamid oder einer Mischung aus mindestens zwei amorphen oder mikrokristallinen Polyamiden, mittels eines Spritzgusswerkzeugs spritzgegossen wird, wobei während des Spritzgießvorgangs
die Polyamidschmelze auf eine Temperatur von 255 bis 310 °C eingestellt wird,
die Temperatur des Spritzgusswerkzeugs auf 50 bis 120 °C eingestellt wird und
die Einspritzgeschwindigkeit der Polyamidschmelze auf 10 bis 50 mm/s eingestellt wird.

2. Verfahren nach Anspruch 1, **dadurch gekennzeichnet, dass** während des Spritzgießvorgangs die Einspritzgeschwindigkeit der Polyamidschmelze auf 15 bis 35 mm/s, bevorzugt 18 bis 30 mm/s eingestellt wird.

3. Verfahren nach einem der vorhergehenden Ansprüche, **dadurch gekennzeichnet, dass** während des Spritzgießvorgangs die Polyamidschmelze auf eine Temperatur von 260 bis 295 °C, bevorzugt 270 bis 290 °C eingestellt wird.

4. Verfahren nach einem der vorhergehenden Ansprüche, **dadurch gekennzeichnet, dass** während des Spritzgießvorgangs die Temperatur des Spritzgusswerkzeugs auf 60 bis 100 °C, bevorzugt 70 bis 90 °C eingestellt wird.

5. Verfahren nach einem der vorhergehenden Ansprüche, **dadurch gekennzeichnet, dass** während des Spritzgießvorgangs der Einspritzdruck auf 800 bis 1500 bar, bevorzugt 900 bis 1400 bar, besonders bevorzugt 1000 bis 1300 bar eingestellt wird.

6. Verfahren nach einem der vorhergehenden Ansprüche, **dadurch gekennzeichnet, dass** während des Spritzgießvorgangs der Staudruck auf 50 bis 200 bar, bevorzugt 70 bis 150 bar, besonders bevorzugt 100 bis 130 bar eingestellt wird.

7. Verfahren nach einem der vorhergehenden Ansprüche, **dadurch gekennzeichnet, dass** während des Spritzgießvorgangs der Nachdruck auf 400 bis 800 bar, bevorzugt 500 bis 700 bar, besonders bevorzugt 550 bis 650 bar eingestellt wird.

8. Verfahren nach einem der vorhergehenden Ansprüche, **dadurch gekennzeichnet, dass** während des Spritzgießvorgangs die Schneckenumfangsgeschwindigkeit auf 0,20 bis 0,50 m/s, bevorzugt 0,25 bis 0,42 m/s, besonders bevorzugt 0,28 bis 0,35 m/s eingestellt wird.

9. Verfahren nach einem der vorhergehenden Ansprüche, **dadurch gekennzeichnet, dass** die Verweilzeit der Polyamidschmelze im Zylinder der Spritzgussmaschine 0,5 bis 6 min, bevorzugt 0,75 bis 5 min, besonders bevorzugt 1 bis 3 min eingestellt wird.

10. Verfahren nach einem der vorhergehenden Ansprüche, **dadurch gekennzeichnet, dass** das amorphe oder mikrokristallinen Polyamid ausgewählt ist aus der Gruppe bestehend aus amorphen oder mikrokristallinen Polyamiden mit einer Glasübergangstemperatur (gemessen nach ISO 11357) von 125 bis 210 °C, bevorzugt von 145 bis 200 °C, besonders bevorzugt von 150 bis 190 °C.

11. Verfahren nach einem der vorhergehenden Ansprüche, **dadurch gekennzeichnet, dass** das amorphe oder mikrokristallinen Polyamid gebildet ist aus
mindestens einem Diamin, ausgewählt aus einer Gruppe, die aus Ethylendiamin, Butandiamin, Pentandiamin, Methylpentandiamin, Hexamethylendiamin, Octandiamin, Methyloctandiamin, Nonandiamin, Decandiamin, Undecandiamin, Dodecandiamin, Trimethylhexamethylendiamin, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Cyclohexandiamin, Bis(aminomethyl)cyclohexan und seinen Alkylderivaten besteht, und
mindestens einer Dicarbonsäure, ausgewählt aus einer Gruppe, die aus Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Phenylindandicarbonsäure, Phenylendioxydiessigsäure, Dimerfettsäure mit 36 oder 44 C-Atomen, Isophthalsäure, Terephthalsäure, Naphthalindicarbonsäure besteht, und gegebenenfalls
mindestens einem Laktam mit 4 bis 15 C-Atomen und/oder α,ω-Aminosäure mit 4 bis 15 C-Atomen.

12. Verfahren nach einem der vorhergehenden Ansprüche, **dadurch gekennzeichnet, dass** das amorphe oder mikrokristalline Polyamid ausgewählt ist aus der Gruppe bestehend aus PA 6I, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM10/11, PA PACM10/12, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM14/1014, PA MACM18/1018, PA MACM12/1212, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN und Mischungen oder Copolymere hiervon, wobei das MACM bis zu maximal 25 Mol-%, bezogen auf die Summe der molaren Anteile aller Monomere von 100 Mol-%, durch PACM und/oder das Laurinlaktam ganz oder teilweise durch Caprolaktam ersetzt sein kann.

13. Verfahren nach einem der vorhergehenden Ansprüche, **dadurch gekennzeichnet, dass** das amorphe oder mikrokristalline Polyamid zu 2 bis 28 Gew-% durch mindestens ein teilkristallines aliphatisches Polyamid ersetzt ist, wobei dieses mindestens eine teilkristalline aliphatische Polyamid ausgewählt ist aus der Gruppe bestehend aus PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM 13, PA PACM 14, PA PACM 15, PA PACM16, PA PACM17, PA PACM18, PA PACM36, PA PACM10/11, PA PACM10/12, Polyetheramiden, Polyetheresteramiden, Polyesteramiden und deren Mischungen oder Copolymere, insbesondere PA 6, PA 69, PA 610, PA 612, PA 614, PA 1010, PA 1212, PA 6/66/12, PA 6/66, PA 6/12, PA 11, PA 12, Polyetheramide, Polyetheresteramide und deren Mischungen oder Copolymere.

14. Verfahren nach vorhergehendem Anspruch, **dadurch gekennzeichnet, dass** das amorphe oder mikrokristalline Polyamid zu 5 bis 25 Gew-%, bevorzugt 10 bis 20 Gew.-% durch mindestens ein teilkristallines aliphatisches Polyamid ersetzt ist.

15. Verfahren nach vorhergehendem Anspruch, **dadurch gekennzeichnet, dass** das amorphe oder mikrokristalline Polyamid weitere Additive enthält, insbesondere ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, Farbstoffen, Nukleierungsmitteln, Kristallisationsverzögerern, Antistatika, Entformungsmitteln, optischen Aufhellern, natürlichen Schichtsilikaten, synthetischen Schichtsilikaten und deren Mischungen.

## Claims

1. A method for the low-stress injection moulding of amorphous or microcrystalline polyamides, in which a polyamide melt, consisting of an amorphous or microcrystalline polyamide or a mixture of at least two amorphous or microcrystalline polyamides, is injection-moulded by means of an injection mould, wherein during the injection-moulding operation
the polyamide melt is set to a temperature of 255 to 310°C,
the temperature of the injection mould is set to 50 to 120°C, and
the injection rate of the polyamide melt is set to 10 to 50 mm/s.

2. A method according to Claim 1, **characterised in that** during the injection-moulding operation the injection rate of the polyamide melt is set to 15 to 35 mm/s, preferably 18 to 30 mm/s.

3. A method according to one of the preceding claims, **characterised in that** during the injection-moulding operation the polyamide melt is set to a temperature of 260 to 295°C, preferably 270 to 290°C.

4. A method according to one of the preceding claims, **characterised in that** during the injection-moulding operation the temperature of the injection mould is set to 60 to 100°C, preferably 70 to 90°C.

5. A method according to one of the preceding claims, **characterised in that** during the injection-moulding operation the injection pressure is set to 800 to 1500 bar, preferably 900 to 1400 bar, particularly preferably 1000 to 1300 bar.

6. A method according to one of the preceding claims, **characterised in that** during the injection-moulding operation the back pressure is set to 50 to 200 bar, preferably 70 to 150 bar, particularly preferably 100 to 130 bar.

7. A method according to one of the preceding claims, **characterised in that** during the injection-moulding operation the follow-up pressure is set to 400 to 800 bar, preferably 500 to 700 bar, particularly preferably 550 to 650 bar.

8. A method according to one of the preceding claims, **characterised in that** during the injection-moulding operation the peripheral screw speed is set to 0.20 to 0.50 m/s, preferably 0.25 to 0.42 m/s, particularly preferably 0.28 to 0.35 m/s.

9. A method according to one of the preceding claims, **characterised in that** the residence time of the polyamide melt in the cylinder of the injection-moulding machine is set 0.5 to 6 min, preferably 0.75 to 5 min, particularly preferably 1 to 3 min.

10. A method according to one of the preceding claims, **characterised in that** the amorphous or microcrystalline polyamide is selected from the group consisting of amorphous or microcrystalline polyamides having a glass transition temperature (measured in accordance with ISO 11357) of 125 to 210°C, preferably of 145 to 200°C, particularly preferably of 150 to 190°C.

11. A method according to one of the preceding claims, **characterised in that** the amorphous or microcrystalline polyamide is formed
from at least one diamine, selected from a group consisting of ethylenediamine, butanediamine, pentanediamine, methylpentanediamine, hexamethylenediamine, octanediamine, methyloctanediamine, nonanediamine, decanediamine, undecanediamine, dodecanediamine, trimethylhexamethylenediamine, bis(aminocyclohexyl)methane and alkyl derivatives thereof, bis(aminocyclohexyl)propane and alkyl derivatives thereof, isophoronediamine, norbornanediamine, bis(aminomethyl)norbornane, xylylenediamine, cyclohexanediamine, bis(aminomethyl)cyclohexane and alkyl derivatives thereof, and at least one dicarboxylic acid, selected from a group consisting of succinic acid, glutaric acid, adipic acid, pimelic acid, suberic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid, nonadecanedioic acid, eicosanedioic acid, japanic acid, cyclohexanedicarboxylic acid, phenylindane dicarboxylic acid, phenylenedioxy diacetic acid, dimer fatty acid with 36 or 44 C atoms, isophthalic acid, terephthalic acid, naphthalene dicarboxylic acid, and optionally at least one lactam with 4 to 15 C atoms and/or α,ω-amino acid with 4 to 15 C atoms.

12. A method according to one of the preceding claims, **characterised in that** the amorphous or microcrystalline polyamide is selected from the group consisting of PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC 14, PA TMDC18, PA PACM12, PA PACM10/11, PA PACM10/12, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM14/1014, PA MACM18/1018, PA MACM12/1212, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN and mixtures or copolymers thereof, wherein up to at most 25 mole %, relative to the total of the molar contents of all the monomers of 100 mole %, of the MACM can be replaced by PACM, and/or the laurolactam can be replaced entirely or partly by caprolactam.

13. A method according to one of the preceding claims, **characterised in that** 2 to 28% by weight of the amorphous or microcrystalline polyamide is replaced by at least one partially crystalline aliphatic polyamide, this at least one partially crystalline aliphatic polyamide being selected from the group consisting of PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, PA PACM10/11, PA PACM10/12, polyether amides, polyether ester amides, polyester amides and mixtures or copolymers thereof, in particular PA 6, PA 69, PA 610, PA 612, PA 614, PA 1010, PA 1212, PA 6/66/12, PA 6/66, PA 6/12, PA 11, PA 12, polyether amides, polyether ester amides and mixtures or copolymers thereof.

14. A method according to the preceding claim, **characterised in that** 5 to 25% by weight, preferably 10 to 20% by weight, of the amorphous or microcrystalline polyamide is replaced by at least one partially crystalline aliphatic polyamide.

15. A method according to the preceding claim, **characterised in that** the amorphous or microcrystalline polyamide contains further additives, in particular selected from the group consisting of condensation catalysts, chain transfer agents, defoaming agents, inorganic stabilisers, organic stabilisers, lubricants, dyes, marking agents, pigments, dyes, nucleating agents, crystallisation retardants, antistatic agents, mould release agents, optical brighteners, natural sheet silicates, synthetic sheet silicates and mixtures thereof.

## Revendications

1. Procédé pour le moulage par injection à faible contrainte de polyamides amorphes ou microcristallins, dans lequel une masse fondue de polyamides, consistant en un polyamide amorphe ou microcristallin ou en un mélange d'au moins deux polyamides amorphes ou microcristallins, est moulée par injection à l'aide d'un moule pour moulage par injection, auquel cas, pendant l'opération de moulage par injection
on ajuste la masse fondue de polyamides à une température de 255 à 310°C,
on ajuste la température du moule pour moulage par injection à 50 à 120°C, et
on ajuste la vitesse d'injection de la masse fondue de polyamides à 10 à 50 mm/s.

2. Procédé selon la revendication 1, **caractérisé en ce qu'**on ajuste pendant l'opération de moulage par injection la vitesse d'injection de la masse fondue de polyamide à 15 à 35 mm/s, de préférence à 18 à 30 mm/s.

3. Procédé selon l'une des revendications précédentes, **caractérisé en ce qu'**on ajuste pendant l'opération de moulage par injection la masse fondue de polyamides à une température de 260 à 295°C, de préférence de 270 à 290°C.

4. Procédé selon l'une des revendications précédentes, **caractérisé en ce qu'**on ajuste pendant l'opération de moulage par injection la température du moule pour moulage par injection à 60 à 100°C, de préférence à 70 à 90°C.

5. Procédé selon l'une des revendications précédentes, **caractérisé en ce qu'**on ajuste pendant l'opération de moulage par injection la pression d'injection à 800 à 1500 bar, de préférence à 900 à 1400 bar, d'une manière particulièrement préférée à 1000 à 1300 bar.

6. Procédé selon l'une des revendications précédentes, **caractérisé en ce qu'**on ajuste pendant l'opération de moulage par injection la pression de retenue à 50 à 200 bar, de préférence à 70 à 150 bar, d'une manière particulièrement préférée à 100 à 130 bar.

7. Procédé selon l'une des revendications précédentes, **caractérisé en ce qu'**on ajuste pendant l'opération de moulage par injection la post-pression à 400 à 800 bar, de préférence à 500 à 700 bar, d'une manière particulièrement préférée à 550 à 650 bar.

8. Procédé selon l'une des revendications précédentes, **caractérisé en ce qu'**on ajuste pendant l'opération de moulage par injection la vitesse de rotation de la vis à 0,20 à 0,50 m/s, de préférence à 0,25 à 0,42 m/s, d'une manière particulièrement préférée à 0,28 à 0,35 m/s.

9. Procédé selon l'une des revendications précédentes, **caractérisé en ce qu'**on ajuste le temps de séjour de la masse fondue de polyamides dans le cylindre de la machine à mouler par injection à 0,5 à 6 min, de préférence à 0,75 à 5 min, d'une manière particulièrement préférée à 1 à 3 min.

10. Procédé selon l'une des revendications précédentes, **caractérisé en ce que** le polyamide amorphe ou microcristallin est choisi dans le groupe consistant en les polyamides amorphes ou microcristallins ayant une température de transition vitreuse (mesurée selon ISO 11357) de 125 à 210°C, de préférence de 145 à 200°C, d'une manière particulièrement préférée de 150 à 190°C.

11. Procédé selon l'une des revendications précédentes, **caractérisé en ce que** le polyamide amorphe ou microcristallin est choisi parmi
au moins une diamine choisie dans un groupe qui est constitué par l'éthylènediamine, la butanediamine, la pentanediamine, la méthylpentanediamine, l'hexaméthylènediamine, l'octanediamine, la méthyloctanediamine, la nonanediamine, la décanediamine, l'undécanediamine, la dodécanediamine, la triméthylhexaméthylènediamine, le bis(aminocyclohexyl)méthane et ses dérivés alkylés, le bis(aminocyclohexyl)propane et ses dérivés alkylés, l'isophoronediamine, la norbornanediamine, le bis(aminométhyl)norbornane, la xylylènediamine, la cyclohexanediamine, le bis(aminométhyl)cyclohexane et ses dérivés alkylés, et
au moins un acide dicarboxylique choisi dans un groupe qui est constitué par l'acide succinique, l'acide glutarique, l'acide adipique, l'acide pimélique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide heptadécanedioïque, l'acide octadécanedioïque, l'acide nonadécanedioïque, l'acide éicosanedioïque, l'acide japanique, l'acide cyclohexanedicarboxylique, l'acide phénylindanedicarboxylique, l'acide phénylènedioxydiacétique, l'acide gras dimère ayant 36 ou 44 atomes de carbone, l'acide isophtalique, l'acide téréphtalique, l'acide naphtalènedicarboxylique, et éventuellement
au moins un lactame ayant 4 à 15 atomes de carbone et/ou un acide α,ω-aminé ayant 4 à 15 atomes de carbone.

12. Procédé selon l'une des revendications précédentes, **caractérisé en ce que** le polyamide amorphe ou microcristallin est choisi dans le groupe consistant en PA 6I, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM10/11, PA PACM10/12, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM14/1014, PA MACM18/1018, PA MACM12/1212, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/MACMI/MACMT/MACMN et les mélanges ou copolymères de ceux-ci, le MACM pouvant, jusqu'à un maximum de 25 % en moles par rapport à la somme des proportions molaires de l'ensemble des monomères, égale à 100 % en moles, être remplacé par du PACM et/ou le laurilactame en totalité ou en partie par du caprolactame.

13. Procédé selon l'une des revendications précédentes, **caractérisé en ce que** le polyamide amorphe ou microcristallin est remplacé à raison de 2 à 28 % en poids par au moins un polyamide aliphatique partiellement cristallin, ce dernier étant au moins un polyamide aliphatique partiellement cristallin choisi dans le groupe consistant en PA 6, PA 46, PA 49, PA 410, PA 411, PA 412, PA 413, PA 414, PA 415, PA 416, PA 418, PA 436, PA 66, PA 69, PA 610, PA611, PA612, PA613, PA614, PA615, PA 616, PA 617, PA 618, PA 1010, PA 66/6, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, PA PACM10/11, PA PACM10/12, les polyétheramides, les polyétheresteramides, les polyesteramides et les mélanges ou copolymères de ceux-ci, en particulier PA 6, PA 69, PA 610, PA 612, PA 614, PA 1010, PA 1212, PA 6/66/12, PA 6/66, PA 6/12, PA 11, PA 12, les polyétheramides, les polyétheresteramides et les mélanges ou copolymères de ceux-ci.

14. Procédé selon la revendication précédente, **caractérisé en ce que** le polyamide amorphe ou microcristallin est à raison de 5 à 25 % en poids, de préférence de 10 à 20 % en poids, remplacé par au moins un polyamide aliphatique partiellement cristallin.

15. Procédé selon la revendication précédente, **caractérisé en ce que** le polyamide amorphe ou microcristallin contient des additifs supplémentaires, choisis en particulier dans le groupe constitué par les catalyseurs de condensation, les régulateurs de chaîne, les antimoussants, les stabilisants inorganiques, les stabilisants organiques, les lubrifiants, les colorants, les agents de marquage, les pigments, les colorants, les agents de nucléation, les retardateurs de cristallisation, les antistatiques, les agents de démoulage, les azurants optiques, les phyllosilicates naturels, les phyllosilicates synthétiques et les mélanges de ceux-ci.
